## Europäisches Patentamt
## European Patent Office
## Office européen des brevets

(19)

(11) Numéro de publication: **0 044 232
B1**

(12) # FASCICULE DE BREVET EUROPEEN

(45) Date de publication du fascicule du brevet:
06.03.85

(51) Int. Cl.⁴: **G 01 T 1/15**

(21) Numéro de dépôt: **81400973.4**

(22) Date de dépôt: **17.06.81**

(54) **Dosimètre numérique portatif de mesure et de contrôle d'un rayonnement ionisant.**

(30) Priorité: **01.07.80 FR 8014703**

(43) Date de publication de la demande:
**20.01.82 Bulletin 82/3**

(45) Mention de la délivrance du brevet:
**06.03.85 Bulletin 85/10**

(84) Etats contractants désignés:
**AT BE CH DE GB IT LI NL SE**

(56) Documents cités:
**DE - A - 2 641 039
FR - A - 2 314 505**

(73) Titulaire: **MERLIN GERIN, Rue Henri Tarze,
F-38050 Grenoble Cedex (FR)**

(72) Inventeur: **Mastain, Pierre, 77, Avenue Calandro, Salons
de Provençe (FR)**
Inventeur: **Pailhes, Alain, 13, Résidence La Charlotte,
Lamanon (FR)**

(74) Mandataire: **Kern, Paul et al, Merlin Gerin.Sce.
Brevets 20, rue Henri Tarze, F-38050 Grenoble Cedex
(FR)**

## Description

L'invention concerne un dosimètre numérique portatif de mesure et de contrôle d'un rayonnement ionisant comportant:

— un capteur d'irradiation pour la conversion du rayonnement ionisant en impulsions électriques,
— un dispositif électronique de contrôle pour la mise en mémoire des impulsions du capteur dans un compteur de dose,
— un organe d'affichage pour la visualisation instantanée du contenu du compteur de dose sous forme numérique,
— et un dispositif de transmission pour la lecture automatique du dosimètre et la centralisation des données dans un système informatique extérieur de surveillance.

Selon un dispositif connu du genre mentionné, le dispositif de transmission des informations du dosimètre vers le système informatique s'effectue par l'intermédiaire d'une liaison capacitive ou d'un dispositif à contacts électriques. Certains de ces dispositifs sont néanmoins sensibles à des rayonnements électromagnétiques parasites.

L'invention a pour but de remédier aux inconvénients précités et de permettre la réalisation d'un dosimètre portatif perfectionné équipé d'un dispositif de transmission fiable sans aucune liaison galvanique pour la transcription automatique du contenu du compteur de dose et du numéro d'identification de l'appareil au système informatique à chaque passage d'accès déterminé de la zone de surveillance.

Le dosimètre numérique portatif selon l'invention est caractérisé dans la revendication 1.

La double commande en série du circuit de lecture assure une sécurité de l'incrémentation du compteur binaire et évite l'émission intempestive d'ordres de transmission dûs à des facteurs parasites, notamment un champ magnétique perturbateur émis par un appareil non blindé ou un faisceau optique convenablement découpe.

Selon une caractéristique de l'invention, le dosimètre comporte un circuit de repérage à élément actif contenant un numéro d'identification du dosimètre transcrit automatiquement avec le contenu du compteur de dose vers l'émetteur de la liaison opto-électronique lors de l'avance du compteur dans un état actif du circuit de lecture.

Selon une autre caractéristique de l'invention, le dispositif de transmission comporte un sérialisateur positionné par le compteur binaire et intercalé électriquement entre l'émetteur de ladite liaison opto-électronique et un bus de données d'interconnexion du compteur de dose et du circuit de repérage. Dans l'état actif du circuit de lecture le compteur binaire commande l'avance d'un compteur de caractères agencé pour présenter caractère par caractère le contenu numérique du compteur de dose, le numéro d'identification et l'état du dosimètre sur le bus de données. Le sérialisateur, raccordé au bus, aiguille bit par bit chaque caractère vers ledit émetteur de la liaison opto-électronique.

D'autres avantages et caractéristiques ressortiront plus clairement de l'exposé qui va suivre d'un mode de mise en oeuvre de l'invention, donné à titre d'exemple non limitatif et représenté aux dessins annexés, dans lesquels:

la figure 1 montre un schéma électrique synoptique du dosimètre numétrique selon l'invention;

la figure 2 représente le dosimètre en position insérée dans le pupitre de lecture en liaison avec le système informatique;

la figure 3 montre le schéma électrique du récepteur photosensible du circuit de commande de lecture;

la figure 4 représente le schéma électrique de l'émetteur infrarouge de transmission des informations numériques vers le système informatique.

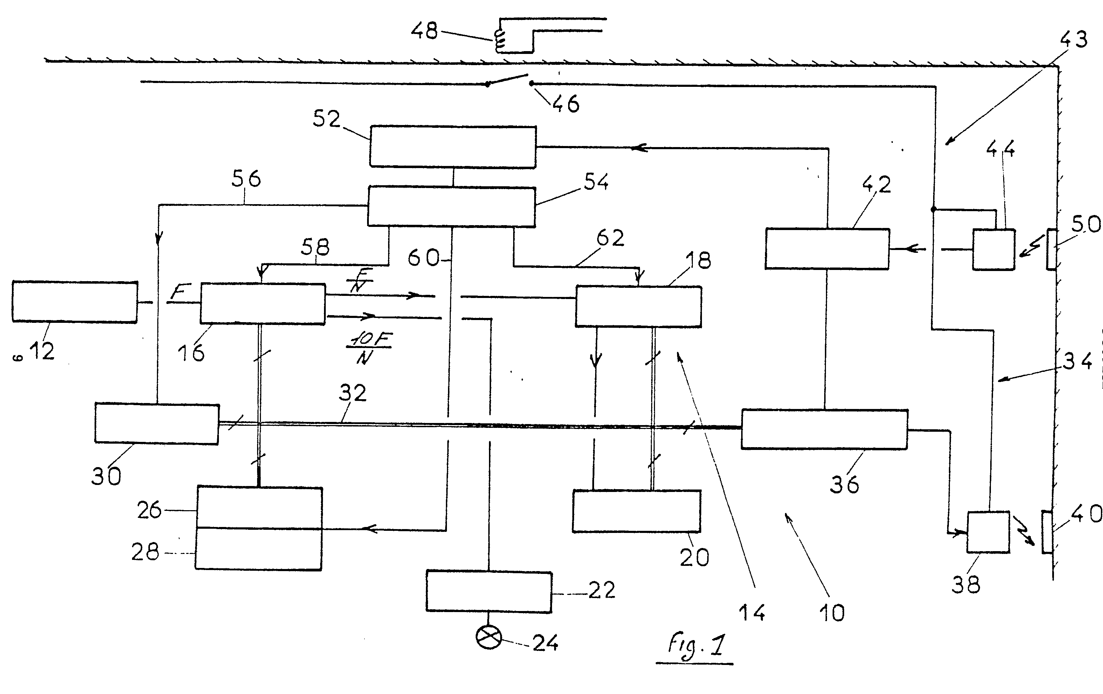

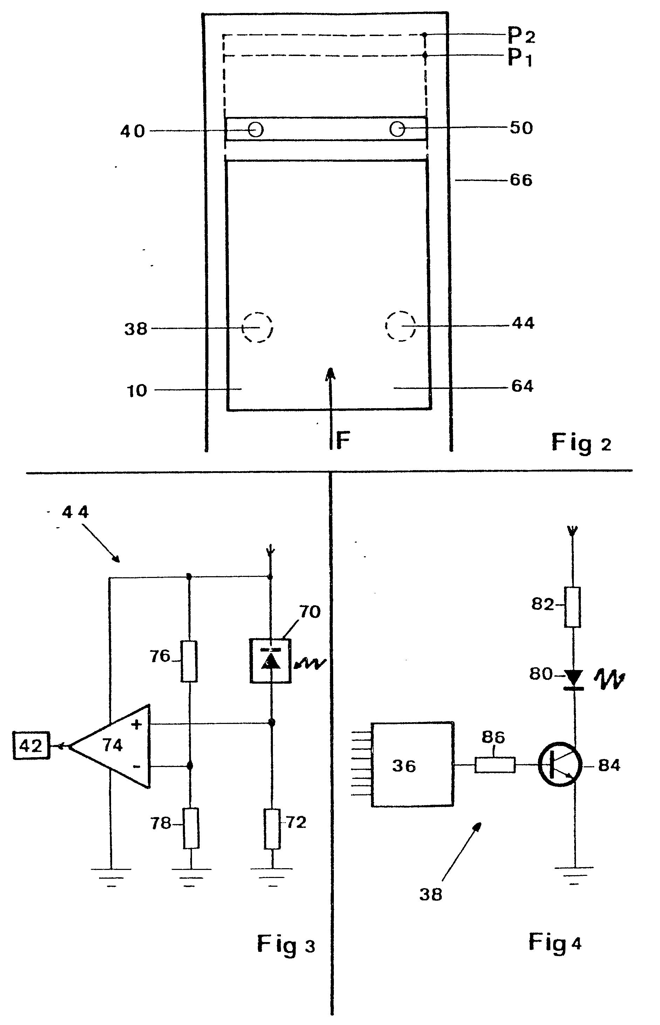

En référence aux figures 1 et 2, le dosimètre 10 de mesure de l'irradiation comporte un capteur 12 associé à un dispositif électronique 14 de contrôle et d'affichage de la dose de rayonnement ionisant. Le capteur 12 convertit le rayonnement électromagnétique ionisant en impulsions électriques dont la fréquence F est fonction de l'intensité du rayonnement. Le dispositif électronique 14 de contrôle comprend un diviseur de fréquence 16 programmable qui calibre les impulsions issues du cpteur 12 avant leur comptage par un compteur de dose 18. N impulsions délivrées par le capteur 12 correspondent à une dose absorbée de un millirad, et le compteur de dose 18 mémorise la dose intégrale. Une lecture directe instantanée de la dose par le porteur du dosimètre 10 s'effectue au moyen d'un afficheur 20 opto-électronique, qui visualise le contenu du compteur de dose 18 sous forme numérique. Le diviseur 16 est connecté d'autre part à un circuit de commande 22 d'un organe de signalisation 24 lumineuse, formé à titre d'exemple par une diode électroluminescente qui émet un flash lumineux pour chaque dose détectée équivalente à un dizième de millirad.

Un numéro d'identification est affecté au dosimètre par l'intermédiaire d'un circuit d'identification ou de repérage 26 à élément actif à six chiffres positionné au montage de l'appareil (de 000 000 à 999 999). Un circuit d'étalonnage 28, formé par une mémoire programmable, coopère avec le diviseur 16 pour assurer une correction de la fréquence des impulsions délivrées en fonction du type de capteur 12 utilisé. Le coefficient d'étalonnage contenu dans la mémoire du circuit 28 est ajustée lors du réglage du dosimètre (de 000 à 255). Un circuit 30 indicateur de l'état du dosimètre est interconnecté avec le diviseur programmable 16, le compteur de dose 18, l'afficheur 20 numérique et les circuits d'identification ou de repérage 26 et d'étalonnage 28 par

l'intermédiaire d'un bus de données 32.

Le contenu du compteur de dose 18 et le numéro d'identification du dosimètre 10 doivent être transcrits automatiquement à un système informatique extérieur (non représenté) à chaque passage du porteur dans un accès déterminé, notamment l'entrée et la sortie de la zone de surveillance. Le système informatique à mini-calculateur ou à microprocesseur assure ensuite la centralisation des données et compile les doses affectées à chaque personne dans un journal de bord.

La lecxture automatique du dosimètre s'opère au moyen d'un transmetteur synchrone de mesure, désigné par le repère général 34, et coopérant avec le dispositif de contrôle 14 pour présenter caractère par caractère le contenu du compteur de dose 18, le numéro d'identification et l'état du dosimètre sur le bus de données 32. Un sérialisateur 36, raccordé au bus 32, aiguille bit par bit chaque caractère vers un émetteur 38 infrarouge coopérant en position de lecture du dosimètre avec un récepteur 40 associé au système informatique. Le sérialisateur 36 comporte une pluralité de lignes d'entrée en parallèle et fournit l'information en série à l'émetteur 38. La transmission des signaux numériques par la liaison opto-électronique 38, 40 délivre l'information active vers le système informatique sans aucun contact électrique ou liaison galvanique.

Le sérialisateur 36 est positionné par un compteur de bits 42 à n pas, piloté par un circuit de commande de lecture 43 formé par un récepteur 44 infrarouge en série avec un interrupteur 46 à lame souple sensible à champ magnétique engendré par une bobine d'excitation 48. L'ordre de lecture au récepteur 44 est donné par un faisceau infrarouge d'un émetteur 50 auxiliaire du transmetteur synchrone 34. Le compteur de bits 42 commande d'autre part l'avance d'un compteur de caractères 52 connecté à un décodeur 54 du numéro de caractère. A chaque tour du compteur de bits 42, le compteur de caractères 52 ordonne la présence sur le bus 32 du caractère suivant. Le décodeur 54 est raccordé par des conducteurs de liaison 56, 58, 60, 62 respectivement au circuit 30 indicateur de l'état du dosimètre, au diviseur 16 programmable, aux circuits d'identification ou de repérage 26 et d'étalonnage 28 et au compteur de dose 18.

Le dosimètre 10 est logé dans un boîtier 64 de forme parallélépipédique (fig. 2) dont l'une des faces permet le passage des faisceaux optiques à l'emetteur 38 et au récepteur 44 à infrarouges. La lecture automatique et la transmission par liaison opto-électronique des informations binaires du dosimètre s'opèrent par introduction selon le sens de la flèche F du boîtier 64 dans un pupitre de lecture 66. Lors du franchissement d'une position intermédiaire $P_1$ intervient l'excitation de la bobine 48 de l'interrupteur 46. La lecture automatique du dosimètre s'opère en quelques millisecondes en position $P_2$ de fin de course.

La lecture et la transmission des données du dosimètre 10 équipé du dispositif de contrôle 14 et du transmetteur synchrone de mesure 34 fonctionnent de la manière suivante:

En position de surveillance et de détection du dosimètre 10, le compteur de dose 18 mémorise la dose intégrale visualisée par l'afficheur 20.

A chaque passage dans un accès déterminé de la zone de surveillance, le porteur introduit le dosimètre dans le pupitre de lecture 66 (fig. 2) pour la transmission des informations au système informatique extérieur. L'avence bit par bit du sérialisateur 36 et l'avance caractère par caractère du décodeur du numéro de caractère 54 interviennent en position active du circuit de commande de lecture 43 lorsque les deux conditions suivantes sont remplies:

— fermeture de l'interrupteur 46 à lame souple commandée par l'excitation de la bobine 48;
— transmission d'un faisceau lumineux de commande de l'émetteur auxiliaire 50 vers le récepteur 44 infrarouge.

Cette double commande en série du circuit 43 assure la sécurité de l'incrémentation du compteur de bits 42. La fermeture de l'interrupteur 46 à lame souple provoque l'alimentation de l'émetteur 38 et du récepteur 44 à infrarouge.

Le dosimètre est alimenté par une pile et l'interrupteur 46 à lame souple est inséré accessoirement dans le circuit d'alimentation des circuits d'identification ou de repérage 26 et d'étalonnage 28, de manière à permettre une économie d'énergie durant la phase de surveillance ou de repos du dosimètre correspondant à l'ouverture de l'interrupteur 46. La durée de transmission des informations par l'émetteur 38 infrarouge ne dure en effet que quelques secondes par jour.

Le compteur de bits 42 est incrémenté d'une unité après chaque impulsion délivrée par le récepteur 44. A chaque tour du compteur de bits 42, le décodeur 54 commande la présence sur le bus 32 du caractère suivant. Le sérialisateur 36 positionné par le compteur 42, aiguille bit par bit chaque caractère vers l'émetteur 38 pour transmettre le contenu numérique du compteur de dose 18 et du circuit d'identification ou de repérage 26 au système informatique.

La remise à zéro du compteur de dose 18 peut être commandée de l'extérieur par l'intermédiaire de l'émetteur 50 auxiliaire qui émet un faisceau lumineux de commande vers le récepteur 44 associé. Le dialogue bidirectionnel par transmission vers l'extérrieur des informations contenues dans le dosimètre 10 et par la génération d'ordres extérieurs de commande au dosimètre ne nécessitent aucun contact auxiliaire électro-mécanique et s'effectue par voies opto-électroniques et magnétiques.

La figure 3 montre le récepteur 44 infrarouges comportant une photodiode 70 réceptrice dont la cathode est connectée à un dispositif d'alimentation et dont l'anode est reliée à la masse par une résistance 72. l'une des entrées d'un amplificateur 74 reçoit le signal de tension aux bornes de la résistance 72, et le point milieu d'un diviseur à résistances 76, 78 est connecté à l'autre entrée de l'amplificateur 74. Les signaux de sortie de ce dernier commandant l'avance du compteur de bits 42.

La figure 4 représente l'émetteur 38 infrarouge formé par une diode électroluminescente émettrice 80 dont l'anode est branchée au dispositif d'alimentation par une résistance 82 et dont la cathode est connectée au collecteur d'un transistor de commande 84. l'émetteur du transistor 84 est relié à la masse et la base reçoit les informations du sérialisateur 36 par l'intermédiaire d'une résistance 86.

L'invention n'est bien entendu nullement limitée au mode de mise en oeuvre plus particulièrement décrit et représenté aux dessins annexés, mais elle s'étend bien au contraire à toute variante restant dans le cadre des équivalences electroniques.

## Revendications

1. Dosimètre numérique portatif (10) de mesure et de contrôle d'un rayonnement ionisant comportant:

— un capteur (12) pour la conversion du rayonnement ionisant en impulsions électriques,
— un dispositif électronique de contrôle (14) pour la mise en mémoire des impulsions du capteur (12) dans un compteur de dose (18),
— un organe d'affichage (20) pour la visualisation instantanée du contenu du compteur de dose (18) sous forme numérique,
— et un dispositif de transmission (34) pour la lecture automatique du dosimètre (10) et la centralisation des données dans un système informatique extérieur de surveillance,

caractérisé par le fait que le dispositif de transmission (34) comporte un premier émetteur (38) en liaison opto-électronique avec ledit système informatique extérieur de surveillance et piloté par l'intermédiaire d'un compteur binaire (42) coopérant avec un circuit de commande de lecture (43) susceptible de se trouver soit dans un état actif de lecture automatique du dosimètre, soit dans un état inactif d'inhibition de ladite lecture, ledit circuit (43) étant formé par un récepteur (44) photosensible commandé par ledit dispositif de transmission et branché en série avec un interrupteur (46) à commande magnétique, ledit récepteur (44) et ledit interrupteur ou relais (46) étant agencés pour provoquer l'avance du compteur binaire (42) dans l'état actif du circuit (43) correspondant à la fermeture de l'interrupteur (46) et à l'émission d'un signal de commande par le récepteur (44) photosensible.

2. Dosimètre numérique portatif de mesure et de contrôle d'un rayonnement ionisant selon la revendication 1, caractérisé par un circuit d'identification ou de repérage (26) à élément actif contenant un numéro d'identification du dosimètre transcrit automatiquement avec le contenu du compteur de dose (18) vers le premier émetteur (38) lors de l'avance du compteur (42) dans l'état actif du circuit de lecture (43).

3. Dosimètre numérique portatif de mesure et de contrôle d'un rayonnement ionisant selon la revendication 2, caractérisé par le fait que le dispositif de transmission (34) comporte un sérialisateur (36) positionné par le compteur binaire (42) et intercalé électriquement entre le premier émetteur (38) et un bus de données (32) d'interconnexion du compteur de dose (18) et du circuit d'identification ou de repérage (26).

4. Dosimètre numérique portatif de mesure et de contrôle d'un rayonnement ionisant selon la revendication 3, caractérisé par un circuit (30) indicateur de l'état du dosimètre coopérant avec ledit sérialisateur (36) par l'intermédiaire du bus (32).

5. Dosimètre numérique portatif de mesure et de contrôle d'un rayonnement ionisant selon la revendication 4, caractérisé par le fait que dans l'état actif du circuit de lecture (43), le compteur binaire (42) commande l'avance d'un compteur de caractères (52) agencé pour présenter caractère par caractère le contenu numérique du compteur de dose (18), le numéro d'identification et l'état du dosimètre sur le bus de données (32), et que le sérialisateur (36), raccordé au bus (32), aiguille bit par bit chaque caractère vers ledit premier émetteur (38).

6. Dosimètre numérique portatif de mesure et de contrôle d'un rayonnement ionisant selon l'une des revendications 1 à 5, caractérisé par le fait que le dispositif de contrôle (14) comprend un diviseur de fréquence (16) inséré entre le capteur (12) et le compteur de dose (18), et coopérant avec un circuit d'étalonnage (28) à mémoire programmable pour assurer un calibrage approprié de la fréquence des impulsions injectées dans le compteur de dose (18) en fonction du type de capteur (12) utilisé, le coefficient d'étalonnage du circuit (28) étant ajusté lors du réglage du dosimètre.

7. Dosimètre numétrique portatif de mesure et de contrôle d'un rayonnement ionisant selon la revendication 5 ou 6, caractérisé par le fait que ledit compteur de caractères (52) est connecté à un décodeur (54) du numéro de caractères coopérant avec le circuit (30) indicateur de l'état du dosimètre, les arcuits d'identification ou de repérage (26) et d'étalonnage (28), le diviseur de fréquence (16) et le compteur de dose (18) pour commander le transfert sur le bus (32) du caractère suivant dans l'étant actif du circuit de lecture (43).

8. Dosimètre numérique portatif de mesure et de contrôle d'un rayonnement ionisant selon l'une quelconque des revendications 1 à 7, caractérisé par le fait que ledit dosimètre est logé dans un boîtier (64) parallélépipédique dont l'une des faces permet, d'une part, le passage de faisceaux optiques émis par le premier émetteur (38) effectuant par liaison opto-électronique la transmission des informations numérques en proven-

dance du dosimètre (10) vers ledet systeme informatique extérieur de surveillancè, et, d'autre part, le passage des faiseaux optiques de commande du récepteur (44) photosensible du circuit de commande de lecture (43), et que la lecture automatique du dosimètre s'opère après introduction du boîtier dans un pupitre de lecture (66) comprenant un réceptur (40) et un deuscieme émetteur (50) à infrarouge coopérant respectivement avec ledit premier émetteur (38) et ledit récepteur photosensible (44) dans l'état actif du circuit (43).

9. Dosimètre numérique portatif de mesure et de contrôle d'un rayonnement ionisant selon la revendication 8, dont le circuit est alimenté par une pile, caractérisé par le fait que ledit interrupteur (46) à commande magnétique du circuit (43) de commande de lecture comporte un relais à lame souple actionnée par le champ magnétique engendré par une bobine d'excitation, ledit relais étant inséré dans le circuit d'alimentation des circuits d'identification ou de repérage (26) et d'étalonnage (28) pour permettre une économie d'énergie dans l'état inactif d'inhibition de la transmission correspondant à l'ouverture du relais.

10. Dosimètre numérique portatif de mesure et de contrôle d'un rayonnement ionisant selon l'une des revendications précédentes 1 à 9, caractérisé par le fait que ledit récepteur (44) photosensible du circuit (43) est agencé pour commander de l'extérieur la remise à zéro du compteur de dose (18) tel que le dialogue bidirectionnel, par transmission vers ledit systeme informatique extérieur des informations numériques contenues dans le dosimètre et par génération d'ordres extérieurs de commande du dosimètre, s'effectue exclusivement par voies opto-électroniques et magnétiques.

**Patentansprüche**

1. Tragbares Digital-Dosimeter (10) zur Messung und Kontrolle einer ionisierenden Strahlung mit

— einem Fühler (12) zur Konversion der ionisierenden Strahlung in elektrische Impulse,
— einer elektronischen Kontrollvorrichtung (14) zur Speicherung der Impulse des Fühlers (12) in einem Dosiszähler (18),
— einem Anzeige-Element (20) zum unmittelbaren Sichtbarmachen der Werte des Dosiszählers (18) in Form von Ziffern,
— einer Übertragungsvorrichtung (34) zum automatischen Ablesen des Dosimeters (10) und zur Zusammenfassung der Daten in einem äußeren Überwachungs-Digital-Datensystem,

dadurch gekennzeichnet, daß die Übertragungsvorrichtung (34) einen ersten Emitter (38) aufweist, der mit dem genannten äußeren Überwachungs-Datensystem in photoelektronischer

Verbindung steht, und der von einem binären Zähler (42) gesteuert wird, der mit einer Ablesesteuerschaltung (43) zusammenarbeitet, die sich entweder in einem aktiven Zustand zum automatischen Ablesen des Dosimeters, oder in einem inaktiven, das Ablesen verhindernden Zustand, befindet, wobei die genannte Steuerschaltung (43) von einem photo-empfindlichen Empfänger (44) gebildet wird, der von der genannten Übertragungsvorrichtung gesteuert wird und mit einem magnetgesteuerten Schalter (46) in Serie geschaltet ist, und wobei der genannte Empfänger (44) und der genannte Schalter oder Relais (46) so ausgeführt sind, um das Vorrücken des binären Zählers (42) in dem aktiven Zustand der Steuerschaltung (43) hervorzurufen, was dem Schließen des Schalters (46) und der Ausgabe eines Steuersignals durch den photo-empfindlichen Empfänger (44) entspricht.

2. Tragbares Digital-Dosimeter zur Messung und Kontrolle einer ionisierenden Strahlung gemäß Anspruch 1, durch eine Erkennungs- oder Markierungsschaltung (26) gekennzeichnet, mit aktivem Element, das eine Erkennungsnummer des Dosimeters enthält, welche automatisch mit dem Inhalt des Dosiszählers (18) auf den ersten Emitter (38) überschrieben wird beim Vorrücken des Zählers (42) im aktiven Zustand der Ableseschaltung (43).

3. Tragbares Digital-Dosimeter zur Messung und Kontrolle einer ionisierenden Strahlung, dadurch gekennzeichnet, daß die Übertragungsvorrichtung (34) ein Reihenübertragungssystem (36) aufweist, welches durch den binären Zähler (42) positioniert wird und elektrisch zwischen dem ersten Emitter (38) und einem Datenbus (32) eingefügt ist zur Verbindung des Dosiszählers (18) und der Erkennungs- oder Markierungsschaltung (26).

4. Tragbares Digital-Dosimeter zur Messung und Kontrolle einer ionisierenden Strahlung gemäß Anspruch 3, durch eine Schaltung (30) gekennzeichnet, die den Zustand des Dosimeters anzeigt und mit dem genannten Reihenübertragungssystem (36) mittels des Datenbusses (32) zusammenarbeitet.

5. Tragbares Digital-Dosimeter zur Messung und Kontrolle einer ionisierenden Strahlung gemäß Anspruch 4, dadurch gekennzeichnet, daß im aktiven Zustand der Ableseschaltung (43) der binäre Zähler (42) das Vorrücken eines Zeichenzählers (52) steuert, so ausgebildet, um Zeichen für Zeichen den digitalen Inhalt des Dosiszählers (18), die Erkennungsnummer und den Dosimeter-Zustand auf dem Datenbus (32) anzuzeigen, und daß das mit dem Bus (32) verbundene Reihenübertragungssystem (36) Bit für Bit jedes Zeichen nach dem genannten ersten Emitter (38) hin leitet.

6. Tragbares Digital-Dosimeter zur Messung und Kontrolle einer ionisierenden Strahlung gemäß einem der Ansprüche 1 bis 5, dadurch gekennzeichnet, daß die Kontrollvorrichtung (14) einen Frequenzteiler (16) aufweist, der zwischen dem Fühler (12) und dem Dosiszähler (18) eingefügt ist und mit einer Eichleitung (28) mit programmierbarem Speicher zusammenarbeitet, um eine geeignete Kalibrierung der Frequenz der in dem Dosiszähler (18) eingespeisten Impulse zu gewährleisten, gemäß dem benutzten Fühlertyp (12), wobei der Eichkoeffizient der Leitung (28) beim Einstellen des Dosimeters geregelt wird.

7. Tragbares Digital-Dosimeter zur Messung und Kontrolle einer ionisierenden Strahlung gemäß Anspruch 5 oder 6, dadurch gekennzeichnet, daß der genannte Zeichenzähler (52) mit einem Decoder (54) der Zeichennummern verbunden ist, welcher mit einer Schaltung (30) zur Anzeige des Dosimeter-Zustandes, sowie mit den Erkennungs- oder Markierungsschaltungen (26), der Eichleitung (28), dem Frequenzteiler (16) und dem Dosiszähler (18) zusammenarbeitet, um die Übertragung des nächsten Zeichens auf den Bus (32) in aktiven Zustand der Ableseschaltung (43) zu steuern.

8. Tragbares Digital-Disometer zur Messung und Kontrolle einer ionisierenden Strahlung gemäß irgendeinem der Ansprüche 1 bis 7, dadurch gekennzeichnet, daß das genannte Dosimeter in einem quaderförmigen Gehäuse (64) untergebracht ist, von dem die eine Seite einerseits den Durchfluß optischer Strahlenbündel gestattet, die von dem ersten Emitter (38) ausgehen, wobei durch eine photo-elektronische Verbindung die Übertragung der vom Dosimeter (10) kommenden digitalen Informationen nach dem genannten äußeren Überwachungs-Digital-Datensystem hin ausgeführt wird, und andererseits den Durchfluß optischer Strahlenbündel zur Steuerung des photo-empfindlichen Empfängers (44) der Ablese-Steuerschaltung (43) gestattet, und daß die automatische Ablesung des Dosimeters nach Einschieben des Gehäuses in ein Lesepult (66) erfolgt, das einen Empfänger (40) und einen zweiten Infrarot-Emitter (50) aufweist, die jeweils mit dem genannten ersten Emitter (38) und dem genannten photo-empfindlichen Empfänger (44) im aktiven Zustand der Schaltung (43) zusammenarbeiten.

9. Tragbares Digital-Dosimeter zur Messung und Kontrolle einer ionisierenden Strahlung gemäß Anspruch 8, dessen Stromkreis von einer Batterie gespeist wird, dadurch gekennzeichnet, daß der genannte Schalter (46) mit magnetischer Steuerung der Ableseschaltung (43) ein Relais mit biegsamer Klinge aufweist, die durch das von einer Erregungsspule erzeugte Magnetfeld betätigt wird, wobei das genannte Relais in dem Speisestromkreis der Erkennungs- oder Markierungsschaltung (26) und der Eichleitung (28) eingefügt ist, um eine Energieersparnis zu ermöglichen, im inaktiven Hemmzustand der Übertragung, der dem Öffnen des Relais entspricht.

10. Tragbares Digital-Dosimeter zur Messung und Kontrolle einer ionisierenden Strahlung, gemäß einem der vorhergehenden Ansprüche 1 bis 9, dadurch gekennzeichnet, daß der genannte photo-empfindliche Empfänger (44) der Schaltung (43) so ausgebildet ist, um von außen die Nullstellung des Dosiszählers (18) zu steuern, so daß der bidirektionale Dialog ausschließlich auf photo-elektronische und magnetische Weise geschieht, durch Übertragung auf das äußere Überwachungsdatensystem der digitalen Informationen des Dosimeters und durch die Erzeugung von äußeren Befehlen zur Steuerung des Dosimeters.

## Claims

1. Digital portable measuring survey dosemeter (10) for a ionizing radiation and comprising:

— a detector (12) converting the ionizing radiation to electrical impulses,
— an electronic survey device (14) for the storage of impulses of the detector (12) in a dose radiation counter (18),
— a display device (20) indicating a visual instantaneous representation of the integral dose stored in said counter (18), in a digital form,
— a transmitter (34) for automatically reading the dosemeter (10) and for sending the informations to an external data processing surveyor system,

characterized in that the transmitter (34) comprises a first emitter (38) optoelectronically linked with said external data processing survey system and controlled by means of a binary counter (42) cooperating with a reading control circuit (43) which may be either in an operative state during automatic reading of dosemeter (10), or in an inactive state causing the inhibition of said reading, said circuit (43) including a photosensitive receiver (44) controlled by said transmitter connected in series with a magnetic switch (46) said receiver (44) and said switch or relay (46) being deviced for shifting forwards the binary counter (42) in the operative state of the circuit (43) which corresponds to closed state of the switch (46) and to the delivering of a control signal by the receiver (44).

2. Digital portable measuring and survey dosemeter for a ionizing radiation according to claim 1, characterized by an identifier or marker circuit (26) having an active element including an indicator number of the dosemeter, which is automatically transmitted to the first emitter (38) with the dose stored in the radiation counter (18) when the counter (42) is shifted in the operative state of the reading circuit.

3. Digital portable measuring and survey dosemeter for a ionizing radiation according to claim 2, characterized in that the transmitter includes a serial transmission system (36) operated by the binary counter (42) and electrically inserted between the first emitter (38) and a data bus (32) connecting the radiation counter (18) and the identifier or marker circuit (26).

4. Digital portable measuring and survey dosemeter for a ionizing radiation according to claim 3, characterized by an indicator circuit (30) of the state of the dosemeter (10) cooperating with said serial transmission system (36) through the bus (32).

5. Digital portable measuring and survey dosemeter for a ionizing radiation according to claim 4, characterized in that the binary counter (42) controls the shifting of a character counter (52) in the operative of the reading circuit (43) to apply to the data bus (32) character after character the digits of the radiation counter (18), the identification number and the dosemeter state and that the serial transmission system (36) is linked to the bus (32) and applies the bits of each character to said first emitter (38).

6. Digital protable measuring and survey dosemeter for a ionizing radiation according to one of the claims 1—5, characterized in that the survey device (14) includes a frequency divider (16) inserted between the detector (12) and the dose radiation counter (18), said divider (16) cooperating with a calibration device (28) having a programming memory which adjusts the frequency of the impulses delivered to the radiation counter (18) in accordance with the utilized detector (12) type, the calibration rate of device (28) being adjusted when the dosemeter is adjusted.

7. Digital portable measuring and survey dosemeter for a ionizing radiation according to claim 5 or 6, characterized in that the character counter (52) is connected to a decoder (54) of the character number which cooperates with the dosemeter state indicating device (30), the identifier or marker circuit (26) and the calibration device (28), the frequency divider (16) and the dose radiation counter (18) for applying each character on the bus (32) in the operative state of said reading circuit (43).

8. Digital portable measuring and survey dosemeter for a ionizing radiation according to any one of the claims 1—7, characterized in that said dosemeter in housed insides a parallelipiped case (64), one of its faces permitting on the one hand the passage of the optical beams emitted by the first emitter (38) for the optoelectronical transmission of the digital informations given by the dosemeter (10) towards the external data processing survey system and on the other hand the passage of the optical control beams which controls the photosensitive receiver (44) of the reading control circuit (43), and that the automatic dosemeter reading occurs when the case is inserted in a reading desk comprising a receiver (40) and a second infrared emitter (50) which respectively cooperates with said first emitter (38) and said photosensitive receiver (44) in the operative state of circuit (43).

9. Digital portable measuring and survey dosemeter for a ionizing radiation, according to claim 8, wherein the circuit is supplied by means of a battery, characterized in that said switch (46) which magnetically controls the reading control circuit (43) comprises a reed switch operated by the magnetic field of a coil, said reed relay being inserted in the supply circuit of the identifier or marker and calibration circuits (26, 28) to permit a power economy in the transmission inhibition inoperative state which correspond to the opening of the relay.

10. Digital portable measuring and survey dosemeter for a ionizing radiation, according to one of the claims 1—9, characterized in that said photosensitive receiver (44) of circuit (43) is arranged to reset from the outside the dose counter (18) to zero so that the bidirectionnal information exchange is made exclusively by the optoelectronic and magnetic ways for the transmission of the digital informations of the dosemeter towards said external data processing system and for the emission of external control orders of the dosemeter.

$\frac{F}{N}$

$\frac{10F}{N}$

0 044 232

Fig. 1

0 044 232

Fig 2

Fig 3

Fig 4

11